# EUROPÄISCHE PATENTSCHRIFT

(11) **EP 0 947 295 B1**
(45) Veröffentlichungstag und Bekanntmachung des Hinweises auf die Patenterteilung: **08.12.1999**
(21) Anmeldenummer: 98106247.4
(22) Anmeldetag: 06.04.1998
(51) Int. Cl.: B25J 15/02, E02F 3/96, B23D 17/06

(54) **Werkzeug für den Anbau an Manipulatoren zur Handhabung und/oder Bearbeitung von Werkstücken vzw. von Gussteilen**
Tool to be fixed on a manipulator for the handling or treating of workpieces in particular castings
Outil pouvant etre monté sur un manipulateur en vue de la manutention ou le travail de pièces en particulier de pièces de fonderie

(43) Veröffentlichungstag der Anmeldung: 06.10.1999
(73) Patentinhaber: THYSSEN HENSCHEL GMBH, 34127 Kassel (DE)
(72) Erfinder: Weisheit, Gerhard, Dipl.-Ing., 34379 Calden (DE)
(74) Vertreter: Dahlkamp, Heinrich-Leo, Dipl.-Ing.

(56) Entgegenhaltungen:
- EP-A- 0 362 098
- EP-A- 0 613 982
- DE-U- 9 401 815
- GB-A- 2 126 938
- US-A- 5 039 254

## Beschreibung

Die Erfindung betrifft ein Werkzeug für den Anbau an Manipulatoren zur Handhabung und/oder Bearbeitung von Werkstücken vzw. von Gußteilen, insbesondere hoher Bruchdehnung mit einem am Manipulator angeordneten Grundkörper und einer mit diesem verbundenen Greifzange gemäß Oberbegriff des Anspruchs 1.

Bei verschiedenen Anwendungsfällen für den Einsatz von Manipulatoren, wie beispielsweise in Gießereien, ergibt sich die Notwendigkeit, bestimmte Teile zu transportieren und andererseits für diese oder andere Teile eine Bearbeitung vorzusehen. So ist es in Gießereien notwendig, nach Abschluß des Gießprozesses Gußteile für eine weitere Verwendung zu transportieren und das beim Gießen entstehende Kreislaufmaterial von den Gießwerkstücken zu trennen und für ein wiederholtes Einschmelzen vorzubereiten.

Hierzu ist aus der Druckschrift WO 97/19252 bekannt, an einem in Gießereien einsetzbaren Manipulator eine Greifzange zu befestigen, die infolge von Schwenkbewegungen ihrer Greifarme Werkstücke erfassen und durch Bewegung des Manipulators transportieren kann. Die Greifzange ist zentrisch mit einem Schlaghammer versehen, mit dem an Gußteilen befindliche Angüsse entfernt werden können, wenn sich das Werkstück nicht in der Greifzange befindet.

Eine solche Vorrichtung ist vergleichsweise kompliziert aufgebaut und für eine Zerkleinerung von Kreislaufmaterial, insbesondere von Gießläufen in Vorbereitung eines erneuten Einschmelzens wenig geeignet.

Aus der DE 94 01 815 U1 ist ein Werkzeug gemäß oberbegriff des Anspruchs 1 bekannt. Hierbei ist die Einrichtung Zur Betätigung der Greifarme im Hinblick auf die Aufbringung der hohen Kraft zum Schneiden der Werkstücke ungünstig und verbesserungswürdig.

Der Erfindung liegt daher die Aufgabe zugrunde, die Einsatzmöglichkeiten eines Manipulators mit Greifwerkzeug derart zu erweitern, dass neben der Handhabung der Werkstücke auch eine wirksame Materialzerkleinerung erfolgen kann.

Erfindungsgemäß ist zur Veränderung der Relativlage der Greifarme zueinander zwischen den freien Enden der Greifarme ein druckbelastbares Betätigungselement vorgesehen, das bevorzugt in dem von dem gabelförmigen Endstück eines Greifarmes gebildeten Freiraum geschützt angeordnet sein kann.

Die Erfindung ist mit dem Vorteil verbunden, dass ein Transport von Werkstücken und die Bearbeitung, insbesondere die Zerkleinerung von Materialien, vorzugsweise von Kreislaufmaterial wie Gießläufen, mit nur einem Werkzeug realisiert werden kann.

Von diesem Betätigungselement können gezielt große Kräfte aufgebracht werden, die es ermöglichen, Gußteile auch hoher Bruchdehnung zu brechen und damit zu zerkleinern.

In weiterer Ausgestaltung der Erfindung, kann hierfür das Betätigungselement eine hydraulisch betätigte Zylinderkolbeneinheit sein, die in einem Greifarm schwenkbar gelagert sowie gegen unbeabsichtigte Schwenkbewegungen gesichert ist und auf ein am anderen Greifarm angeordnetes Widerlager wirkt.

Das Widerlager ist bevorzugt als Schwenkbügel ausgebildet, der den Greifarm umschließt und mit einer Druckplatte versehen ist. Hiermit ist die Möglichkeit gegeben, auch bei unterschiedlicher Öffnungsweite der Greifarme die Druckkraft des Betätigungselements senkrecht zur Oberfläche der Druckplatte wirken zu lassen.

Zur Erhöhung der Werkzeugstandzeit können die Stirnflächen der Haltestege und des Werkstückaufnahmeelements zumindest im Bereich ihrer Seitenkanten eine verschleißfeste Schutzschicht tragen.

Die Erfindung soll nachfolgend anhand eines Ausführungsbeispieles mit zugehörigen Zeichnungen näher erläutert werden.

Es zeigen
- Fig. 1: eine Seitenansicht eines erfindungsgemäßen Werkzeuges mit geöffneten Greifarmen zur Aufnahme von Werkstücken,
- Fig. 2: eine weitere Seitenansicht des Werkzeuges mit geschlossenen Greifarmen zur Aufnahme von zu brechenden Materialien,
- Fig. 3: eine vergrößerte Darstellung der Endbereiche der Greifarme gemäß Fig. 2 und
- Fig. 4: eine Schnittdarstellung an der Linie A - A gemäß Fig. 2.

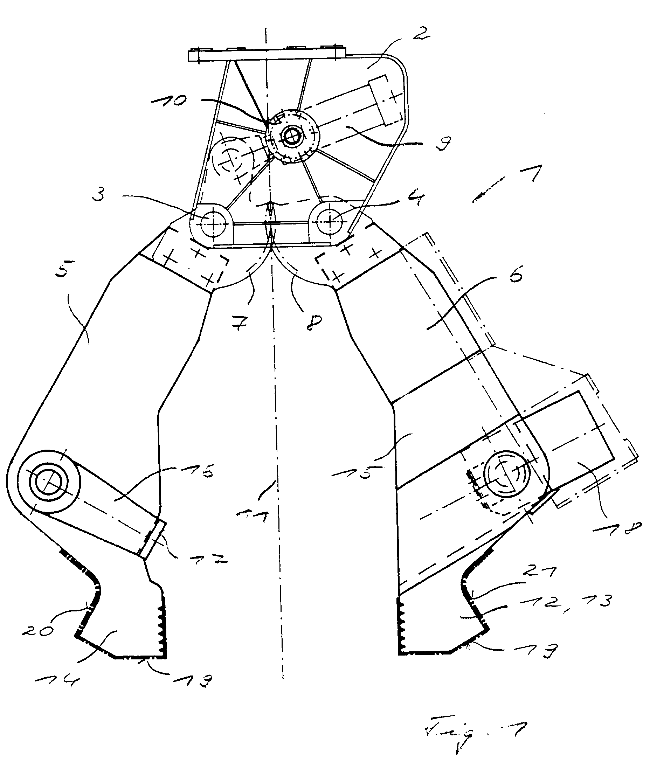

Die in Fig. 1 dargestellte Greifzange 1 ist für einen an sich bekannten und hier nicht dargestellten Manipulator bestimmt. Die Verbindung zum Manipulator erfolgt über einen an einer Greifzange 1 angeordneten Grundkörper 2, der die Bewegungen des Manipulators auf die Greifzange 1 überträgt und an dem die Versorgungsleitungen vorzugsweise für Hydraulikflüssigkeit in an sich bekannter Weise zur Greifzange 1 geführt sind. Im Grundkörper 2 der Greifzange 1 befinden sich Achsen 3 und 4, auf denen Greifarme 5 und 6 schwenkbar angeordnet sind. Die Greifarme 5 und 6 tragen miteinander kämmende Zahnsegmente 7 und 8.

Im Grundkörper 2 ist eine hydraulisch betätigte Zylinderkolbeneinheit 9 in einem Lager 10 schwenkbeweglich gelagert, deren Kolbenstange oberhalb des Zahnsegmentes 7 des Greifarmes 5 mit diesem verbunden ist.

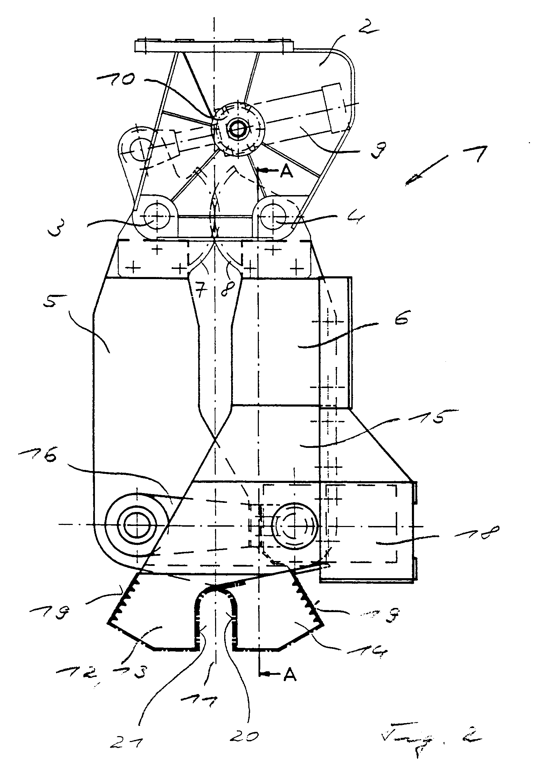

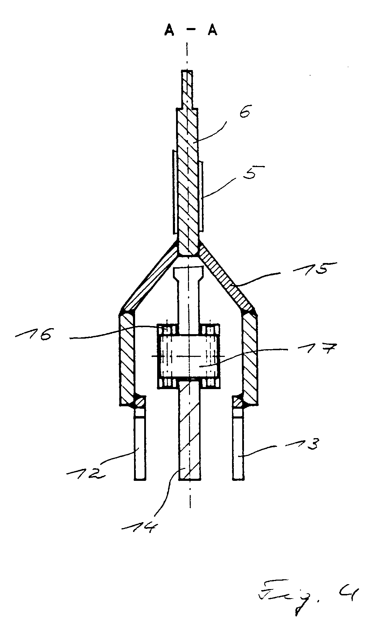

An den Greifarmen 5 und 6 sind Haltestege 12, 13 und 14 angeformt, wobei die Haltestege 12 und 13 zueinander beabstandet und starr mit einem gabelförmigen Endstück 15 des Greifarmes 5 verbunden sind, wie aus Fig. 4 ersichtlich. In den aus dem gabelförmigen Endstück 15 und den Haltestegen 12 und 13 gebildeten Zwischenraum kann der Greifarm 5 mit starr an diesem angeordneten Haltesteg 14 geschwenkt werden. Ein am Greifarm 5 vorgesehener Schwenkbügel 16 mit Druckplatte 17 ist derart dimensioniert, daß die Schwenkbewegung des Greifarmes 5 in den am Greifarm 6 gebildeten Zwischenraum nicht behindert wird, wie in Fig. 2 in Verbindung mit Fig. 4 dargestellt.

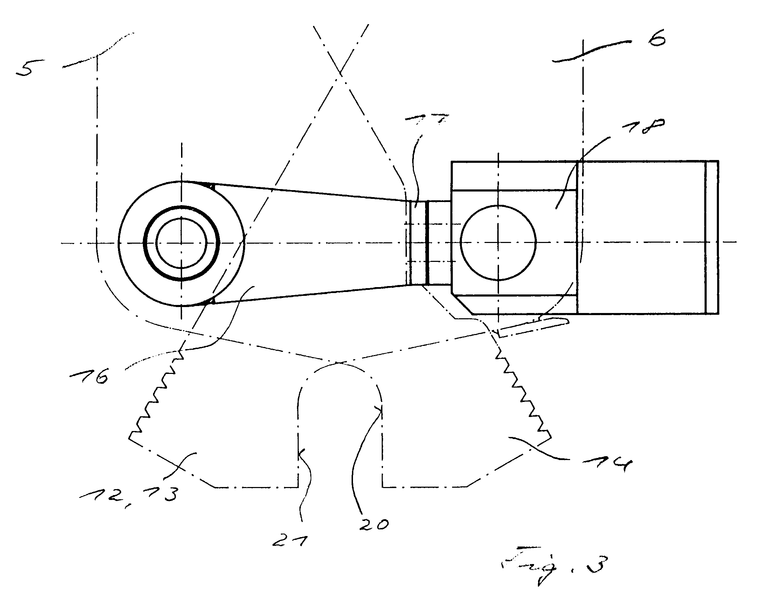

Im gabelförmigen Endstück 15 des Greifarmes 6 ist ein Druckzylinder 18 schwenkbar gelagert und derart eingebaut, daß dessen Kolbenstange bei geschlossenen Greifarmen 5 und 6 eine Druckkraft auf die Druckplatte 17 des Schwenkbügels 16 ausüben kann (Fig. 3), was zu einer Verringerung des Abstandes der Stirnflächen 20 und 21 der Haltestege 12, 13 und 14 führt, wobei die Druckkraft senkrecht auf die Druckplatte 17 wirkt. Mit der Verringerung des Abstandes wird auf ein zwischen den Stirnflächen 20 und 21 befindliches Materialstück eine Biegekraft ausgeübt, die zum Bruch und damit zur Zerkleinerung des Materialstücks führt. Da bei diesem Prozeß die Kanten der Stirnflächen 20 und 21 einer hohen Beanspruchung unterliegen, sind zumindest diese, wenn nicht die gesamten Stirnflächen 20 und 21 mit einer verschleißfesten Schutzschicht 19 versehen.

Zum Erfassen eines Werkstückes wird bei geöffneten Greifarmen 5 und 6 die Zylinderkolbeneinheit 9 mit Hydraulikflüssigkeit beaufschlagt, so daß über die am Greifarm 5 angelenkte Kolbenstange der Zylinderkolbeneinheit 9 der Greifarm 5 um die Achse 3 in Richtung der Symmetrieachse 11 geschwenkt wird. Da das Zahnsegment 7 des Greifarms 5 mit dem Zahnsegment 8 des Greifarms 6 in Wirkverbindung steht, wird auch der Greifarm 6 in Richtung der Symmetrieachse 11 geschwenkt. Die Endposition der Greifarme 5 und 6 ist dann erreicht, wenn zwischen den Stirnflächen 20 und 21 der Haltestege 12, 13 und 14 ein für die Aufnahme eines zu brechenden Materialstücks bspw. eines Gießlaufes ausreichender Freiraum vorhanden ist. In dieser, in Fig. 2 dargestellten Position kann durch eine Öffnungsbewegung der Greifarme 5 und 6 ein Gießlauf erfaßt, gehalten und transportiert werden. Die hierfür notwendige Lageänderung der Greifarme 5 und 6 erfolgt über die Zylinderkolbeneinheit 9. Besteht die Notwendigkeit, einen von den Greifarmen 5 und 6 erfaßten Gießlauf zu zerkleinern, wird der Druckzylinder 18 mit Hydraulikflüssigkeit beaufschlagt, worauf dessen Kolbenstange auf die Druckplatte 17 des Schwenkbügels 16 einen vorwählbaren Druck ausübt, so daß der Gießlauf gebrochen und damit zerkleinert werden kann.

Weiterhin liegt es im Rahmen der Erfindung, aus der in Fig. 1 dargestellten Position der Greifzange ein bestimmtes Material zu erfassen und zu zerkleinern, wenn das Material dieser Zerkleinerung einen nicht zu hohen Widerstand entgegensetzt. Für Materialien beispielsweise hoher Bruchdehnung wird dagegen eine Ausgangslage der Greifzange, wie sie in Fig. 2 gezeigt ist, genutzt, da hier vergleichsweise große Kräfte vom Druckzylinder 18 aufgebracht werden können.

## Patentansprüche

1. Werkzeug für den Anbau an Manipulatoren zur Handhabung und/oder Bearbeitung von Werkstücken vzw. von Gußteilen, insbesondere hoher Bruchdehnung, mit einem zur Anordnung am Manipulator geeigneten Grundkörper (2) und einer Greifzange (1), die aus relativ zueinander bewegbaren, in dem Grundkörper (2) schwenkbar gelagerten Greifarmen (5, 6) besteht, an deren freien Enden jeweils ein Werkstückaufnahmeelement (14) angeordnet ist, von denen das Werkstückaufnahmeelement (14) eines Greifarmes (6) aus einem gabelförmigen Endstück (15) und starr mit dem Endstück (15) verbundenen Haltestegen (12, 13) gebildet ist, die zueinander beabstandet und derart positioniert sind, daß das am anderen Greifarm (5) ausgebildete Werkstückaufnahmeelement (14) in den Zwischenraum zwischen den Haltestegen (12, 13) schwenkbar ist, wobei die Greifarme (5, 6) und/oder die Werkstückaufnahmeelemente (12, 13, 14, 15) derart gekröpft ausgeführt sind, daß die im geöffneten Zustand der Greifzange (1) außenliegenden Stirnflächen (20, 21) der Werkstückaufnahmeelemente (12, 13, 14) bei maximal möglicher Annäherung der Greifarme (5, 6) zu innenliegenden, zueinander beabstandeten Stirnflächen (20, 21) werden, dadurch gekennzeichnet, daß zur Veränderung der Relativlage der Greifarme (5, 6) zueinander zwischen den freien Enden der Greifarme (5, 6) ein druckbelastbares Betätigungselement (18) vorgesehen ist.

2. Werkzeug nach Anspruch 1, dadurch gekennzeichnet, daß das Betätigungselement (18) in dem von dem gabelförmigen Endstück (15) eines Greifarmes (6) gebildeten Freiraum angeordnet ist.

3. Werkzeug nach Anspruch 1 oder 2, dadurch gekennzeichnet, daß es sich bei dem Betätigungselement um eine hydraulisch betätigte Zylinderkolbeneinheit (18) handelt, die in einem Greifarm (6) schwenkbar gelagert sowie gegen unbeabsichtigte Schwenkbewegungen gesichert ist und auf ein am anderen Greifarm (5) angeordnetes Widerlager (16, 17) wirkt.

4. Werkzeug nach Anspruch 3, dadurch gekennzeichnet, daß das Widerlager als Schwenkbügel (16) ausgebildet ist, der den Greifarm (5) umschließt und mit einer Druckplatte (17) versehen ist, auf die die Druckkraft des Betätigungselements (18) senkrecht zur Druckplatte (17) wirkt.

## Claims

1. A tool to be mounted on manipulators for handling and/or processing of workpieces, preferably of castings, particularly of those featuring high breaking elongation, with a suitable base body (2) arranged at the manipulator and with gripping pliers (1) consisting of gripping arms (5,6) relatively movable to each other and resting in a slewable bearing in said base body (2), with one workpiece take-up element (14) each being mounted at their free ends, of which the workpiece take-up element (14) of a gripping arm (6) is formed by a fork-type end piece (15) and retaining webs (12,13) rigidly connected with said end piece (15), said retaining webs being placed at certain distances to each other and properly positioned so that the workpiece take-up element (14) configured at the other gripping arm (5) can be swung into the gap between the retaining webs (12,13), with said gripping arms (5,6) and/or said workpiece take-up elements (12, 13, 14) being so cranked that those front faces (20,21) of workpiece take-up elements (12,13,14) lying outside if gripping pliers (1) are open become distanced front faces (20, 21) lying inside if gripping arms approach to each other in the maximum possible way, characterised in that a pressure-loaded actuation element (18) is provided for between the free ends of the gripping arms (5,6) in order to alter the relative position of gripping arms (5,6) to each other.

2. A tool pursuant to Claim 1, characterised in that the actuation element (18) is located in the free space formed by the fork-type end piece (15) of a gripping arm (6).

3. A tool pursuant to Claim 1 or 2, characterised in that the actuation element is a hydraulically actuated cylinder piston unit (18) which rests in a slewable bearing in a gripping arm (6) and which is secured against unintentional sewing movements and which acts on a rebutment (16, 17) located at the other gripping arm (5).

4. A tool pursuant to Claim 3, characterised in that the rebutment is configured as a swing bow (16) which encloses the gripping arm (5) and which is provided with a thrust plate (17) onto which the pressure force of the actuation element (18) acts vertically versus the thrust plate (17).

## Revendications

1. Outil pouvant être monté sur un manipulateur en vue de la manipulation et/ou du traitement de pièces, de préférence de préférence de pièces de fonderie, en particulier avec un allongement à la rupture élevé, avec un corps de base (2) approprié pour un montage sur un manipulateur et un grappin relié audit corps de base (1) constitué par des mâchoires (5, 6) pivotantes logées dans le corps de base (2) et aux extrémités libres desquelles se trouve un élément de prise de la pièce (14), dont l'élément de prise de la pièce (14) d'une mâchoire (6) est constitué par un élément d'extrémité en forme de fourche (14) et de talons de fixation (12, 13) reliés de manière rigide à l'élément d'extrémité (15), ces talons de fixation étant écartés l'un de l'autre et positionnés de manière telle que l'élément de prise de la pièce (14) sur l'autre mâchoire (5) puisse pivoter dans l'espace intermédiaire constitué entre les talons de fixation (12, 13), les mâchoires (5, 6) et/ou les éléments de prise de la pièce (12, 13, 14, 15) étant contrecoudés de manière telle que lorsque le grappin (1) est ouvert, les faces extérieures (20, 21) des éléments de prise de la pièce (12, 13, 14) se transforment en faces intérieures (20, 21) écartées l'une de l'autre lorsque les mâchoires (5, 6) s'approchent au plus possible, caractérisé en ce qu'un élément de commande à pression (18) est prévu entre les extrémités libres des mâchoires (5, 6) pour permettre la modification de la position relative des mâchoires (5, 6) l'une par rapport à l'autre.

2. Outil selon la revendication 1 caractérisé en ce que l'élément de commande (18) est situé dans l'espace libre constitué par l'élément d'extrémité en forme de fourche (15) d'une mâchoire (6).

3. Outil selon la revendication 1 ou 2 caractérisé en ce que l'élément de commande est une unité de piston de cylindre à commande hydraulique (18) pivotante logée dans une mâchoire (6), protégée contre des mouvements de pivotement accidentels et qui agit sur une butée (16, 17) situé sur une autre mâchoire (5).

4. Outil selon la revendication 3 caractérisé en ce que la butée a la forme d'un étrier pivotant (16) qui englobe la mâchoire (5) et possède une plaque de pression (17) sur laquelle l'effort de pression de l'élément de commande (18) agit perpendiculairement à la plaque de pression (17).
